(19) Europäisches Patentamt
European Patent Office
Office européen des brevets

(11) Veröffentlichungsnummer: **0 436 879 A1**

## (12) EUROPÄISCHE PATENTANMELDUNG

(21) Anmeldenummer: 90124519.1

(22) Anmeldetag: 18.12.90

(51) Int. Cl.⁵: **H02M 7/06, H01G 4/40**

(30) Priorität: 08.01.90 DE 4000303

(43) Veröffentlichungstag der Anmeldung:
**17.07.91 Patentblatt 91/29**

(84) Benannte Vertragsstaaten:
**CH DE FR GB IT LI NL**

(71) Anmelder: **TECHNOLOGY SERVICE INC.**
**Loquat Drive 521**
**Anna Maria, Florida 34216(US)**

(72) Erfinder: **Der Erfinder hat auf seine Nennung verzichtet**

(74) Vertreter: **Manitz, Gerhart, Dr. Dipl.-Phys. et al**
**MANITZ, FINSTERWALD & ROTERMUND**
**Seelbergstrasse 23/25**
**W-7000 Stuttgart 50(DE)**

(54) Versorgungsschaltung bzw. Netzgerät zur Strom- oder Spannungsversorgung elektronischer Geräte od.dgl.

(57) Die Versorgungsschaltung ist als montagefertiges Modul ausgebildet und umfaßt einen Eingangstransformator (5'), Gleichrichterelemente (1) sowie einen Kondensator (2) mit großer Kapazität zur Glättung der ausgangsseitigen Gleichspannung.

Fig. 3

EP 0 436 879 A1

# VERSORGUNGSSCHALTUNG BZW. NETZGERÄT ZUR STROM- ODER SPANNUNGSVERSORGUNG ELEKTRONISCHER GERÄTE OD.DGL.

Die Erfindung betrifft eine Versorgungsschaltung bzw. ein Netzgerät zur Strom- oder Spannungsversorgung elektronischer Geräte od.dgl., mit einer Gleichrichterschaltung, einem Transformator, dessen Primärwicklung mit den Eingängen der Versorgungsschaltung und dessen Sekundärwicklung mit der Gleichrichterschaltung verbunden sind, und mindestens einem ausgangsseitig der Gleichrichterschaltung angeschlossenen Kondensator großer Kapazität zur Glättung des erzeugten Gleichstromes bzw. der erzeugten Gleichspannung.

Derartige Versorgungsschaltungen werden in großer Zahl benötigt, um elektronische Geräte über das öffentliche Stromnetz versorgen zu können. Gemäß der CH-PS 621 216, welche eine Schaltung der eingangs angegebenen Art zeigt, werden diese Schaltungen regelmäßig aus diskreten Elementen aufgebaut.

Dabei können die Elemente auf gedruckten Leiterplatten angeordnet sein, welche im allgemeinen auch die Elemente bzw. integrierten Schaltkreise des zu versorgenden elektronischen Gerätes tragen. Dies bedeutet, daß die Versorgungsschaltung im allgemeinen zusammen mit dem elektronischen Gerät hergestellt werden muß. Dadurch wird der Herstellungsaufwand für das jeweilige elektronische Gerät verhältnismäßig groß.

Gegebenenfalls werden zwar Versorgungsschaltungen eingesetzt, deren diskrete Elemente zusammen mit einem Transformator auf einer separaten Leiterplatte montiert und zu einem Block vergossen sind. Jedoch hat diese Bauweise den Nachteil eines besonders großen Raumbedarfes.

Kompakte und komplett vorfabrizierbare Versorgungsschaltungen bzw. Netzgeräte für unterschiedliche elektronische Geräte wurden bisher - trotz eines an sich vorhandenen Bedarfes - nicht entwickelt.

Die US-PS 35 41 433 zeigt eine Leistungsschaltung, an der ausgangsseitig hohe Ströme (mit beispielsweise 200 A) bei geringer Spannung (von beispielsweise 3 V) abgreifbar sind.

Diese Schaltung besteht im wesentlichen aus einer Transformatoranordnung und Halbleiterelementen, wobei die Wickelkörper der Transformatorwicklungen auch die Halbleiterelemente tragen und mit Kühlrippen zur Abfuhr der erheblichen Wärmemengen versehen sind, die durch die Halbleiterelemente aufgrund der hohen Stromstärken erzeugt werden.

Die DE-PS 34 28 210 sowie die DE-PS 27 06 560 zeigen jeweils komplett vorgefertigte Hochspannungskaskaden, die im wesentlichen aus Halbleiter-Gleichrichterelementen bzw. Dioden und Kondensatoren bestehen.

Aus der DE-OS 31 25 281 ist ein R-C-Element bekannt, welches im wesentlichen aus einem keramischen Vielschichtkondensator sowie einer auf einer Deckfläche desselben angeordneten Widerstandsbahn besteht. Dabei ist das Element so ausgestaltet, daß sich sowohl eine R-C-Reihenschaltung als auch eine R-C-Parallelschaltung herstellen läßt.

Auch die DE-PS 459 705 zeigt ein R-C-Glied, welches als R-C-Parallelschaltung aus diskreten Elementen zusammengesetzt ist.

Aus den deutschen Gebrauchsmustern 71 31 688 und 17 96 813 ist es bekannt, Wickelkondensatoren ringförmig auszubilden, derart, daß andere Elemente, beispielsweise ein Elektromotor, eine Batterie bzw. Halbleiterelemente, wie Gleichrichter od.dgl., innerhalb des Zylinderraumes angeordnet werden können. Auf diese Weise können vom Kondensator ummantelte, relativ kompakte Stromversorgungseinheiten für Blitzlichtgeräte u.dgl. hergestellt werden.

Die US-PS 47 94 510 schließlich zeigt einen Gleichrichter, welcher kompakt und mechanisch hochbelastbar ausgebildet ist, derart, daß er sich am bzw. im Rotor eines Elektromotors bzw. eines Generators unterbringen läßt.

Aufgabe der Erfindung ist es nun, eine komplett vorfabrizierbare kompakte Versorgungsschaltung zu schaffen, welche sich für eine große Vielzahl elektronischer Geräte eignet.

Diese Aufgabe wird erfindungsgemäß dadurch gelöst, daß unter Bildung eines montagefertigen Modules alle Elemente der Versorgungsschaltung miteinander verbunden im bzw. am Gehäuse des Kondensators großer Kapazität untergebracht und an diesem Gehäuse von außen zugängliche Eingangs- und Ausgangsanschlüsse für die Versorgungsschaltung angeordnet sind, wobei das Gehäuse bzw. ein Teil desselben oder ein das Gehäuse fortsetzendes Gehäuseteil aus magnetisierbarem Material bestehen und nach Art eines Wickelkörpers die Wicklungen des Transformators tragen.

Die Erfindung nutzt die Erkenntnis, daß Versorgungsschaltungen der eingangs angegebenen Art jeweils zumindest einen Kondensator mit großer Kapazität und dementsprechend großem Gehäuse aufweisen, welches nur wenig vergrößert zu werden braucht, um darin bzw. daran auch die übrigen Teile der Versorgungsschaltung anzuordnen. Damit wird ein Versorgungsmodul mit besonders geringem Raumbedarf möglich.

Erfindungsgemäß wird auch für den Transformator besonders wenig Raum benötigt, weil das aus magnetisierbarem Material bestehende Gehäuse des Kondensators großer Kapazität bzw. ein magnetisierbares Gehäuseteil als Wickel- und Tragkörper für die Transformatorwicklungen verwendet wird. Das Gehäuse hat also eine Doppelfunktion, indem es sowohl als Wickel -und Tragkörper für die Transformatorwicklungen als auch als Umhüllung für den Kondensator dient.

Aufgrund dieser erfindungsgemäßen Bauweise kann zwar der Wirkungsgrad des Transformators etwas geringer sein als derjenige eines herkömmlichen diskreten Transformators. Jedoch wird dadurch kein ernsthafter Nachteil in Kauf genommen, denn die eventuelle Verschlechterung des Wirkungsgrades wird durch die bei der Erfindung ermöglichte besonders kompakte Bauweise mehr als ausgeglichen. Gleichzeitig wird bei dieser Bauweise der Tatsache Rechnung getragen, daß der Leistungsbedarf der meisten elektronischen Geräte so gering ist, daß ein guter Wirkungsgrad der Versorgungsschaltung vernachlässigbar ist. Im Vordergrund steht vielmehr, daß durch den Transformator eine galvanische Trennung zwischen den (im allgemeinen) an das öffentliche Stromnetz angeschlossenen Eingängen der Versorgungsschaltung und deren Ausgängen gewährleistet wird, die mit dem jeweils zu versorgenden, oftmals empfindlichen Gerät verbunden sind.

Im übrigen kann am Gehäuse zur Aufnahme der Primär- und Sekundärwicklungen des Eingangstransformators ein Ringraum angeordnet sein, welcher zumindest einen ringförmigen Wandbereich aus magnetisierbarem Material besitzt. Dabei wird ein besonders hoher Wirkungsgrad des Transformators erreicht, wenn der Ringraum vollständig von magnetisierbarem Material umschlossen ist. Die den Ringraum bildenden Gehäuseteile können als vom Kondensatorgehäuse gesonderte Teile ausgebildet sein.

Bei der erfindungsgemäßen Bauweise ist vorteilhaft, daß wärmeleitende Elemente der Versorgungsschaltung, beispielsweise Gleichrichterdioden und Spannungsregler, in wärmeleitendem Kontakt mit dem Gehäuse angeordnet werden können, um die entstehende Wärme abzuführen. Somit kann das Gehäuse also auch noch Kühlfunktion besitzen. Gegebenenfalls können zur Verbesserung der Wärmeabfuhr am Gehäuse Kühlrippen angeordnet sein.

Die Eingangs- sowie die Ausgangsanschlüsse der Versorgungsschaltung sind zweckmäßigerweise als Halteelemente ausgebildet, um das von der erfindungsgemäßen Versorgungsschaltung gebildete Modul im zu versorgenden Gerät leichter anordnen zu können.

Im übrigen wird hinsichtlich bevorzugter Merkmale der Erfindung auf die Ansprüche sowie die nachfolgende Erläuterung besonders bevorzugter Ausführungsformen anhand der Zeichnung verwiesen.

Dort zeigt

Fig. 1    einen Schaltplan der erfindungsgemäßen Versorgungsschaltung, wobei der Eingangstransformator weggelassen ist,

Fig. 2    den Eingangstransformator für die Versorgungsschaltung, wobei die Primärwicklung mit dem einen Eingangsanschluß über einen Kondensator verbunden ist,

Fig. 3    einen schematisierten Längsschnitt der Versorgungsschaltung,

Fig. 4    eine Stirnansicht der Versorgungsschaltung entsprechend dem Pfeil IV in Fig. 3,

Fig. 5    einen Längsschnitt einer abgewandelten Ausführungsform und

Fig. 6    einen Längsschnitt einer weiteren abgewandten Ausführungsform.

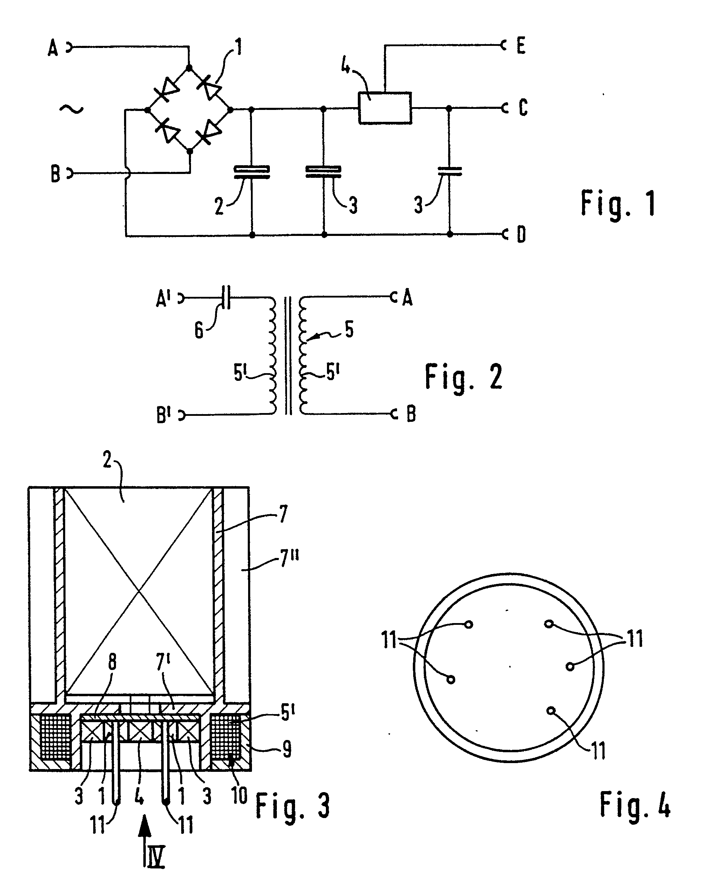

Gemäß Fig. 1 besitzt die Versorgungsschaltung in an sich bekannter Weise Gleichrichterelemente 1, z.B. Dioden, welche einerseits mit Eingangsleitungen A und B und andererseits mit den Ausgangsanschlüssen C und D elektrisch verbunden sind. Wenn an den Eingangsleitungen A und B eine elektrische Wechselspannung bzw. ein Wechselstrom anliegt, kann an den Ausgangsanschlüssen C und D eine elektrische Gleichspannung bzw. ein elektrischer Gleichstrom abgegriffen werden.

Um die ausgangsseitige Gleichspannung bzw. den ausgangsseitigen Gleichstrom zu glätten, sind zwischen den Ausgangsanschlüssen C und D ein Kondensator 2 großer Kapazität, beispielsweise ein Elektrolytkondensator, sowie gegebenenfalls mehrere Kondensatoren 3 kleiner Kapazität in Parallelschaltung angeschlossen.

Darüber hinaus kann in der zum Ausgangsanschluß C führenden Leitung ein Spannungsregler 4, in der Regel ein integrierter Schaltkreis (IC) angeordnet sein, welcher sich über eine Eingangsleitung E steuern läßt.

Gemäß Fig. 2 ist vorgesehen, die Eingangsleitungen A und B über einen Eingangstransformator 5 mit einer Wechselspannungs- bzw. Wechselstromquelle zu verbinden, die an die Eingänge A' und B' angeschlossen wird.

Entsprechend dem Verhältnis der Wicklungszahlen der Primär- und Sekundärwicklungen des Transformators 5 erfolgt dann in bekannter Weise eine Spannungstransformation der eingespeisten Wechselspannung, wobei in der Regel die Spannung zwischen den Leitungen A und B deutlich geringer als die Spannung zwischen den Anschlüssen A' und B' ist.

Gemäß einer bevorzugten Ausführungsform der Erfindung kann vorgesehen sein, die Primärwicklung des Transformators 5 mit zumindest einem der Anschlüsse A' bzw. B' über einen Eingangskondensator 6 zu verbinden. Wenn der Eingangskondensator 6 eine hinreichend geringe Kapazität besitzt, wirkt er im Sinne einer Begrenzung der die Primärwicklung des Transformators 5 durchsetzenden Wechselströme. Dementsprechend wird die vom Transformator 5 in dessen Sekundärwicklung übertragbare Leistung begrenzt, mit der Folge, daß zwischen den Ausgangsanschlüssen C und D nur eine relativ geringe Spannungsdifferenz aufrechterhalten werden kann, wenn an die Ausgangsanschlüsse C und D ein Verbraucher mit relativ geringem elektrischen Widerstand angeschlossen wird. Auf diese Weise läßt sich die an den Ausgangsanschlüssen C und D anstehende Gleichspannung auf Werte einstellen, die geringer sind als sie aufgrund des Verhältnisses der Wicklungszahlen der Primär- und Sekundärwicklungen des Transformators 5 zu erwarten sind. Dies ist gleichbedeutend damit, daß die Ausgangsspannung auch dann vergleichsweise gering bleiben kann, wenn an den Eingangsanschlüssen A' und B' eine relativ hohe Wechselspannung anliegt und das Verhältnis der Wicklungszahlen zwischen Primär- und Sekundärwicklungen des Transformators 5 vergleichsweise klein ist. Auf diese Weise läßt sich die Wicklungszahl der Primärwicklung relativ zur Wicklungszahl der Sekundärwicklung vermindern.

Hinsichtlich des Verhältnisses der Wicklungszahlen des Transformators 5 kann ein ähnliches Ergebnis erreicht werden, wenn anstelle des Eingangskondensators 6 ein Eingangswiderstand angeordnet wird. Der Vorzug des Eingangskondensators 6 besteht darin, daß er praktisch ohne Abgabe von Wärme arbeitet.

Gemäß Fig. 3 kann die Versorgungsschaltung als komplett vorfertigbares Modul ausgebildet sein, welches sich in das jeweils zu versorgende elektronische Gerät in besonders einfacher Weise einsetzen läßt. Dazu brauchen im wesentlichen nur die Ausgangsanschlüsse C und D der Versorgungsschaltung sowie gegebenenfalls die Eingangsleitung E mit dem zu versorgenden Gerät und die Eingangsanschlüsse A' und B' mit dem Netzkabel des Gerätes verbunden zu werden.

Das Modul besitzt ein becherförmiges Gehäuse 7, welches den beispielsweise als Elektrolytkondensator ausgebildeten Kondensator 2 großer Kapazität aufnimmt. Gegenüber einem üblichen derartigen Kondensator 2 mit eigenem Gehäuse ist das Gehäuse 7 in der Fig. 3 nach unten etwas vergrößert, derart, daß auf der Unterseite des Gehäusebodens 7' ein kleiner weiterer Raum geschaffen wird. In diesem weiteren Raum ist eine Leiterplatte 8 eingesetzt, die die Gleichrichterelemente 1, die weiteren Kondensatoren 3 kleiner Kapazität sowie den gegebenenfalls vorgesehenen Spannungsregler 4 trägt und über entsprechende Leitungsbahnen miteinander elektrisch gemäß Fig. 1 verbindet, wobei die Anschlüsse des Kondensators 2 großer Kapazität durch eine Öffnung im Gehäuseboden 7' zur Leiterplatte 8 hin durchgeführt sind.

Da die Gleichrichterelemente 1 beim Betrieb Wärme erzeugen, ist bevorzugt vorgesehen, die Leiterplatte 8 bzw. die Gleichrichterelemente 1 in wärmeleitender Verbindung mit dem Gehäuse 7 anzuordnen, beispielsweise indem die Leiterplatte 8 und/oder die Gleichrichterelemente 1 mit dem Gehäuse 7 mittels einer dünnen, elektrisch isolierenden Klebschicht verbunden sind. Auf diese Weise kann die entstehende Wärme über das Gehäuse 7 nach außen abgeführt werden. Gegebenenfalls kann die Wärmeabfuhr durch die Anordnung von Kühlrippen 7" am Gehäuse 7 verbessert werden.

Die Wicklungen 5' des in Fig. 2 schematisch dargestellten Eingangstransformators 5 sind bevorzugt unmittelbar auf einem Abschnitt des Gehäuses 7 angeordnet, wobei zumindest der die Wicklungen 5' tragende Gehäuseteil aus magnetisierbarem Werkstoff, beispielsweise Eisen od.dgl., bestehen sollte.

Um den magnetischen Schluß zwischen den Wicklungen 5' des Transformators 5 noch weiter zu verbessern, kann vorgesehen sein, die Wicklungen 5' außenseitig durch ein Ringteil 9 aus magnetisierbarem Material zu umschließen, derart, daß die Wicklungen 5' in einem praktisch allseitig von magnetisierbarem Material umschlossenen Ringraum 10 untergebracht sind.

Die elektrische Verbindung der Transformatorwicklungen 5' mit der Leiterplatte 8 bzw. mit den auf der Unterseite des Gehäuses 7 angeordneten Eingangsanschlüssen A' und B' erfolgt über nicht dargestellte Öffnungen bzw. Schlitze in der Wandung des Gehäuses 7.

Der Eingangskondensator 6 (vgl. auch Fig. 2) kann grundsätzlich ebenfalls im Ringraum 10 angeordnet sein. Stattdessen ist es jedoch auch möglich, diesen Kondensator 6 auf der Leiterplatte 8 anzuordnen.

Aufgrund der beschriebenen Bauweise wird für den Transformator 5 nur wenig zusätzlicher Raum benötigt. Gleichzeitig wird die Möglichkeit geschaffen, die Eingangsspannung entsprechend den jeweiligen Notwendigkeiten zu transformieren und das zu versorgende elektronische Gerät galvanisch vollständig von den Eingängen A' und B' abzutrennen.

Der in Fig. 3 untere Raum des Gehäuses 7 kann nach Anordnung sämtlicher Elemente der Versorgungsschaltung mit Kunststoff od.dgl. ausgegossen werden, derart, daß lediglich Anschlußstifte 11 od.dgl. herausragen, welche einerseits die Anschlüsse A' und B' sowie die Anschlüsse D bis E in den Fig. 1 und 2 bilden und andererseits auch zur Halterung der Versorgungsschaltung in einem Gerät geeignet sind. Beispielsweise könnte das Versorgungsmodul mittels der Anschlußstifte 11 ähnlich wie eine herkömmliche elektronische Röhre in einen angepaßten Sockel eingesetzt werden.

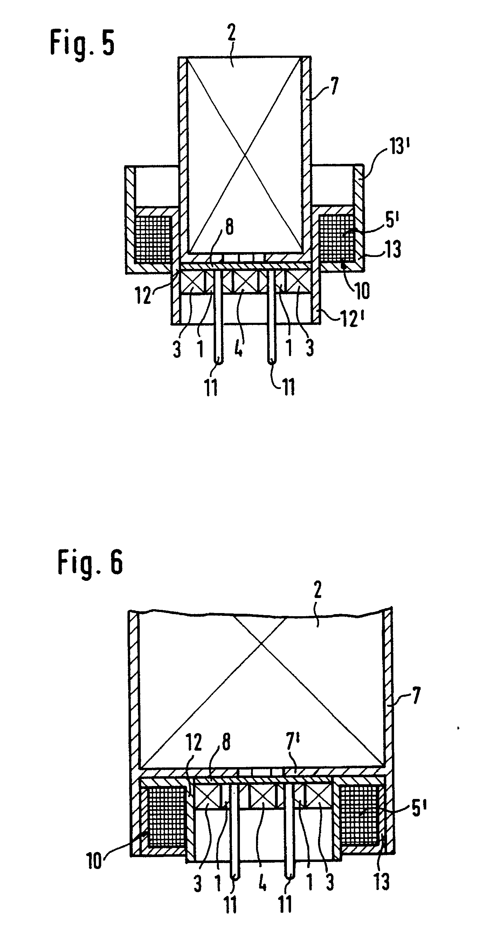

In Fig. 5 wird eine Ausführungsform dargestellt, welche sich von der Ausführungsform nach Fig. 3 im wesentlichen dadurch unterscheidet, daß der Ringraum 10 für die Transformatorwicklungen 5' durch vom Gehäuse 7 des Kondensators 2 gesonderte Gehäuseteile 12 und 13 gebildet wird, die aus magnetisierbarem Material, beispielsweise Eisen, bestehen, während das Gehäuse 7 des Kondensators aus prinzipiell beliebigem Material, beispielsweise Aluminium oder einem sonstigen nicht magnetisierbaren Werkstoff, hergestellt sein kann.

Im dargestellten Beispiel besitzen die Gehäuseteile 12 und 13 jeweils L-förmigen Querschnitt, wobei das radial innere Gehäuseteil 12 mit seinem einen L-Schenkel 12' die Außenwand des Gehäuses 7 des Kondensators 2 fest umschließt. Dabei kann der Schenkel 12' des Gehäuseteiles 12 das Kondensatorgehäuse 7 in Fig. 5 nach unten fortsetzen, derart, daß ein Aufnahmeraum für die weiteren Elemente - wie Gleichrichter 1, Kondensatoren 3, 6 und Spannungsregler 4 - gebildet wird. Der konzentrisch zum L-Schenkel 12' des Gehäuseteiles 12 angeordnete L-Schenkel 13' des Gehäuseteiles 13 kann sich in Fig. 5 nach oben fortsetzen. Auf diese Weise wird die Gesamtoberfläche der Gehäuseteile 12 und 13 vergrößert, um gegebenenfalls eine verbesserte Wärmeabstrahlung zu ermöglichen. Die genannten L-Schenkel 12' und 13' können also auch die Funktion von Kühlflächen übernehmen, über die die insbesondere von den Gleichrichterelementen 1 erzeugte Wärme abgeführt wird.

Zur Verbesserung der Wärmeabfuhr sind dabei die Gleichrichterelemente 1 zweckmäßigerweise in besonders gut wärmeleitender Verbindung zu den Gehäuseteilen 12 bzw. 13 angeordnet.

Bei der Herstellung der in Fig. 5 dargestellten Ausführungsform können die Gehäuseteile 12 und 13 einzeln oder - nach Anordnung der Transformatorwicklungen 5' im Ringraum 10 - gemeinsam auf das Kondensatorgehäuse 7 aufgeschoben werden.

Gegebenenfalls können die Gehäuseteile 12 und 13 mit den Transformatorwicklungen 5' sowie weiteren Elementen der Versorgungsschaltung - wie z.B. Gleichrichterelemente 1, Kondensatoren 3, 6, Spannungsregler 4 u.dgl. - eine komplett vormontierbare Einheit bilden, die auf das Kondensatorgehäuse 7 aufgesetzt wird.

Abweichend von der in Fig. 5 dargestellten Ausführungsform kann das Gehäuseteil 12 im Bereich der Transformatorwicklungen 5' auch U-förmigen Querschnitt, vorzugsweise mit nach außen seitwärts gerichteter U-öffnung, aufweisen, wobei auf die Anordnung eines den Raum 10 für die Transformatorwicklungen 5' nach außen abschließenden Gehäuseteiles 13 gegebenenfalls verzichtet werden kann.

Die in Fig. 6 dargestellte Ausführungsform unterscheidet sich von der Ausführungsform nach Fig. 5 vor allem darin, daß der von den Gehäuseteilen 12 und 13 gebildete Ringraum 10 für die Transformatorwicklungen 5' auf seiner Außenseite von Teilen des Kondensatorgehäuses 7 umschlossen wird.

Bei dieser Ausführungsform können also die Gehäuseteile 12 und 13 gegebenenfalls in eine zylindrische Verlängerung des Kondensatorgehäuses 7 eingeschoben sein.

Abweichend von der dargestellten Ausführungsform, bei der die Gehäuseteile 12 und 13 wiederum L-förmigen Querschnitt aufweisen, kann das Gehäuseteil 12 im Bereich der Transformatorwicklungen 5' wiederum U-förmigen Querschnitt, zweckmäßigerweise wiederum mit seitwärts nach außen gerichteter U-öffnung, besitzen. Hierbei kann das derart ausgebildete Gehäuseteil 12 unmittelbar in einer zylindrischen Verlängerung des Kondensatorgehäuses 7 angeordnet sein, derart, daß ein Bereich des Kondensatorgehäuses 7 den zwischen den U-Schenkeln des Gehäuseteiles 12 gebildeten Ringraum für die Transformatorwicklungen 5' nach außen abschließt.

Im übrigen umschließt das Gehäuseteil 12 wiederum einen Raum zur Aufnahme der übrigen Elemente der Versorgungsschaltung, beispielsweise der Gleichrichterelemente 1, der Kondensatoren 3, 6 und des Spannungsreglers 4.

Diese letztgenannten Elemente können zusammen mit dem Gehäuseteil 12 bzw. den Gehäuseteilen 12 und 13 sowie den Transformatorwicklungen 5' eine vormontierbare Einheit bilden, die in den entsprechenden Abschnitt des Kondensatorgehäuses 7 eingesetzt werden kann.

## Patentansprüche

1.  Versorgungsschaltung zur Strom- bzw. Spannungsversorgung elektronischer Geräte od.dgl., mit einer Gleichrichterschaltung, einem Transformator, dessen Primärwicklung mit den Eingängen der Versorgungsschaltung und dessen Sekundärwicklung mit der Gleichrichterschaltung verbunden sind, und mindestens einem ausgangsseitig der Gleichrichterschaltung angeschlossenen Kondensator großer Kapazität zur Glättung des erzeugten Gleichstromes bzw. der erzeugten Gleichspannung, dadurch gekennzeichnet, daß unter Bildung eines montagefertigen Moduls alle Elemente der Versorgungsschaltung miteinander elektrisch verbunden im bzw. am Gehäuse (7) des Kondensators (2) großer Kapazität untergebracht und an diesem Gehäuse (7) von außen zugängliche Eingangs- und Ausgangsanschlüsse (11;A',B',C,D,E) für die Versorgungsschaltung angeordnet sind, wobei das Gehäuse (7) bzw. ein Teil desselben oder ein das Gehäuse (7) fortsetzendes Gehäuseteil aus magnetisierbarem Material bestehen und nach Art eines Wickelkörpers die Wicklungen (5') des Transformators (5) tragen.

2. Versorgungsschaltung nach Anspruch 1, dadurch gekennzeichnet, daß die Eingangs- und/oder Ausgangsanschlüsse (A',B',C,D,E) als Halteelemente (11) des Moduls ausgebildet sind.

3. Versorgungsschaltung nach einem der Ansprüche 1 oder 2, dadurch gekennzeichnet, daß wärmeerzeugende Elemente (Gleichrichter 1, Spannungsregler 4) in wärmeleitendem Kontakt mit dem Gehäuse (7) angeordnet sind.

4. Versorgungsschaltung nach Anspruch 3, dadurch gekennzeichnet, daß am Gehäuse (7) Kühlrippen (7") angeordnet sind.

5. Versorgungsschaltung nach einem der Ansprüche 1 bis 4, dadurch gekennzeichnet, daß die Primärwicklung des Eingangstransformators (5) elektrisch in Reihe mit einem Eingangskondensator (6) geschaltet ist.

6. Versorgungsschaltung nach einem der Ansprüche 1 bis 4, dadurch gekennzeichnet, daß die Primärwicklung des Eingangstransformators (5) elektrisch in Reihe mit einem Eingangswiderstand geschaltet ist.

7. Versorgungsschaltung nach einem der Ansprüche 1 bis 6, dadurch gekennzeichnet, daß am Gehäuse (7) zur Aufnahme der Primär- und Sekundärwicklungen (5') des Eingangstransformators (5) ein Ringraum (10) angeordnet bzw. ausgebildet ist, welcher zumindest einen ringförmigen Wandbereich aus magnetisierbarem Material besitzt.

8. Versorgungsschaltung nach Anspruch 7, dadurch gekennzeichnet, daß eine Seite des Ringraumes (10) durch das Kondensatorgehäuse (7) und die andere Seite durch ein gesondertes Ringteil (9) gebildet werden.

9. Versorgungsschaltung nach Anspruch 7, dadurch gekennzeichnet, daß der Ringraum (10) durch vom Kondensatorgehäuse (7) gesonderte Ringteile (12,13) umschlossen wird, welche vorzugsweise entweder auf das Kondensatorgehäuse (7) außen aufgeschoben oder in einen Fortsatz des Kondensatorgehäuses (7) innen eingeschoben sind.

10. Versorgungsschaltung nach einem der Ansprüche 7 bis 9, dadurch gekennzeichnet, daß an den den Ringraum (10) bildenden Wandbereichen bzw. Ringteilen (9,12,13) Fortsätze (12' ,13') zur Bildung von Kühlflächen angeordnet sind.

Fig. 1

Fig. 2

Fig. 3

Fig. 4

Fig. 5

Fig. 6

**Europäisches Patentamt**

# EUROPÄISCHER RECHERCHENBERICHT

Nummer der Anmeldung

**EP 90 12 4519**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 788 624 (STRANGE)<br>* Spalte 1, Zeilen 60 - 63; Figur 2 *<br>– – – | 1 | H<br>02 M 7/06<br>H 01 G 4/40 |
| A | FR-A-2 536 598 (BIANCHI)<br>* Zusammenfassung; Figuren 1, 2 *<br>– – – – – | 1 | |

**RECHERCHIERTE SACHGEBIETE (Int. Cl.5)**

H 02 M
H 01 F
H 01 G

Der vorliegende Recherchenbericht wurde für alle Patentansprüche erstellt

| Recherchenort | Abschlußdatum der Recherche | Prüfer |
|---|---|---|
| Den Haag | 04 April 91 | VAN DEN DOEL J.C. |